# Europäisches Patentamt

## European Patent Office

## Office européen des brevets

(19)

(11) Veröffentlichungsnummer: **0 143 264**
**B1**

(12) # EUROPÄISCHE PATENTSCHRIFT

(45) Veröffentlichungstag der Patentschrift:
**17.11.88**

(21) Anmeldenummer: **84111637.9**

(22) Anmeldetag: **28.09.84**

(51) Int. Cl.⁴: **F 16 D 65/12, F 16 D 65/847**

(54) **Bremsscheibe sowie Formkern und Verfahren zur Herstellung einer solchen Bremsscheibe.**

(30) Priorität: **01.10.83 DE 3335807**

(43) Veröffentlichungstag der Anmeldung:
**05.06.85 Patentblatt 85/23**

(45) Bekanntmachung des Hinweises auf die Patenterteilung:
**17.11.88 Patentblatt 88/46**

(84) Benannte Vertragsstaaten:
**AT DE FR GB IT NL SE**

(56) Entgegenhaltungen:
**EP - A - 0 049 527**
**DE - A - 3 152 498**
**FR - A - 1 488 139**
**FR - A - 1 519 112**
**FR - A - 2 498 711**
**GB - A - 2 093 936**

**PATENTS ABSTRACTS OF JAPAN, Band 7, Nr. 133**
**(M-221)[1278], 10. Juni 1983; & JP - A - 58 49 545**
**(TAKAOKA KOGYO K.K.) 23.03.1983**

(73) Patentinhaber: **Schwäbische Hüttenwerke Gesellschaft mit beschränkter Haftung, Wilhelmstrasse 67 Postfach 3280, D-7080 Aalen-Wasseralfingen (DE)**

(72) Erfinder: **Schwarz, Günther, Galgenweg 14, D-7200 Tuttlingen 16 (DE)**

(74) Vertreter: **Jacklsch, Walter, Dipl.-Ing. et al, Menzelstrasse 40, D-7000 Stuttgart 1 (DE)**

**Beschreibung**

Die Erfindung betrifft eine gegossene Bremsscheibe, einen Formkern zu ihrer Herstellung und ein Verfahren zur Herstellung der Bremsscheibe nach dem Oberbegriff der Ansprüche 1 bzw. 2 bzw. 7.

Bei einer bekannten Bremsscheibe dieser Art (FR-A-1 488 139) ist der ringförmige Abschnitt ununterbrochen ausgebildet. Die Kühlluft strömt beim Einsatz der Bremsscheibe längs der Aussenseite des ringförmigen Abschnittes und tritt über den Ringspalt zwischen dem ringförmigen Abschnitt und dem Scheibenkranz in die radial verlaufenden Kühlluftkanäle der Bremsscheibe ein. Mit dieser Aussenkühlung wird die Innenwand des Nabenteiles nicht ausreichend gekühlt, so dass nicht verhindert werden kann, dass die Bremswärme auf die Radlager übergeht und dort zu einer Beschädigung führen kann.

Zur Herstellung derartiger Bremsscheiben werden ein Kernstück und ein hiervon getrennter äusserer Ringteil verwendet. Mit dem Kernstück wird die Innenkontur der Nabe und mit dem Ringteil der Scheibenkranz geformt. Die beiden Formkernteile führen zu Formungenauigkeiten und Toleranzen der in Kauf genommenen Unwuchten. Häufig sind wegen der Formungenauigkeit Nacharbeiten erforderlich.

Eine andere bekannte Bremsscheibe (FR-A-1 519 112), die mit einem einteiligen Formkern hergestellt werden kann, weist im Nabenteil Luftdurchtrittsöffnungen auf. Der ringförmige Abschnitt des Nabenteiles, der im Bereich ausserhalb des Scheibenkranzes liegt, schliesst an den Reibring an, der näher beim Befestigungsabschnitt mit den Befestigungsöffnungen liegt. Der Scheibenkranz weist keine stabile Anbindung an den Nabenteil auf, der infolge des kurzen, ringförmigen Nabenteilabschnittes auch keine hohen Dehnungskräfte aufnehmen kann. Dies wirkt sich nachteilig auf die Stabilität der Bremsscheibe aus. Die Luftdurchtrittsöffnungen im ringförmigen Nabenabschnitt liegen, in radialer Richtung der Bremsscheibe gesehen, im Bereich ausserhalb der Kühlkanäle des Scheibenkranzes. Dadurch gelangt die Kühlluft nicht unmittelbar in die Kühlkanäle, so dass die Kühlwirkung herabgesetzt wird. Die Befestigungsöffnungen für die Schrauben im Befestigungsabschnitt werden an der fertig gegossenen Bremsscheibe nachträglich gebildet. Dadurch wird im Bereich dieser Befestigungsöffnungen die Gussstruktur unterbrochen und beschädigt, was zur Rissbildung und zu Kerbspannungen oder anderen festigkeitsmindernden Störungen im Bereich des Nabenteiles führen kann. Zudem tritt dabei ein erheblicher Materialverlust auf.

Der Erfindung liegt die Aufgabe zugrunde, eine Bremsscheibe, einen Formkern und ein Verfahren der gattungsbildenden Art so auszubilden, dass die Innenkühlung für den Nabenteil verbessert und Formungenauigkeiten beim Giessen klein gehalten sind.

Diese Aufgabe wird bei der gattungsgemässen Bremsscheibe, dem gattungsgemässen Formkern und dem gattungsgemässen Verfahren erfindungsgemäss durch die kennzeichnenden Merkmale der Ansprüche 1 bzw. 2 bzw. 7 gelöst.

Infolge der erfindungsgemässen Anordnung der Reibringe am Nabenteil kann eine bessere Lüftung dieser Teile bei erhöhter Festigkeit des gesamten Gussteiles bzw. der Bremsscheibe erreicht werden. Die erfindungsgemässe Anordnung der beim Giessen der Bremsscheibe mitgegossenen Luftdurchtrittsöffnungen, der Kühlkanäle und des Ringspaltes ermöglichen, dass die Bremswärme von der Innenwand des Nabenteiles unmittelbar nach aussen abgeführt wird. Dadurch wird verhindert, dass beim Bremsen die Radlager übermässig erwärmt und dadurch beschädigt werden. Da die Gusshaut im Bereich der Durchtrittsöffnungen und auch der Befestigungsöffnungen voll erhalten bleibt, treten keine Kerbspannungen, Risse oder andere festigkeitsmindernde Störungen im Bereich dieser Öffnungen auf. Durch entsprechende Ausgestaltung des Übergangsbereiches zwischen der Innenwand der Öffnungen und der angrenzenden Innen- und Aussenwand des zylindrischen Abschnittes in Form von Radien, Fasen oder dgl. kann zudem schädigenden Wirkungen entgegengewirkt werden.

Da bei der Anordnung der Luftdurchtrittsöffnungen und der Befestigungsöffnungen nicht auf eine spätere mechanische Bearbeitung Rücksicht genommen werden muss, können die Öffnungen in jeder beliebiger Lage angeordnet werden, so dass sie strömungs- und festigkeitsmässig sowie hinsichtlich thermischer Belastungen des Nabenteiles an der jeweils günstigsten Stelle vorgesehen werden können. Die unversehrte Gusshaut bildet schliesslich auch einen erhöhten Schutz gegen Korrosion.

Infolge der erfindungsgemässen Ausbildung ist zwischen dem innen liegenden Teil des Kernes und den Luftdurchtrittsöffnungen innerhalb der Bremsscheibe eine Verbindung geschaffen, die die Verwendung eines einteiligen Formkernes ermöglicht. Durch diesen Formkern wird die Bremsscheibe mit sehr geringem Arbeits- und Zeitaufwand sehr genau hergestellt. Es ergibt sich eine gleichmässige Wanddicke im zylindrischen Abschnitt, so dass bisher häufig notwendige mechanische Bearbeitungen der Innen- und Aussenseite vollständig entfallen können. Während bisher nur eine Wanddickentoleranz von $\pm$ 1 bis 2 mm einzuhalten war, ermässigt sich diese Toleranz bei der Herstellung des erfindungsgemässen Formkernes je nach der Qualität des angewandten Formverfahrens und des Formstoffes auf bis zu $\pm$ 0,2 mm.

Die Ausgangsunwucht im Nabenteil der mit dem erfindungsgemässen Formkern hergestellten Bremsscheibe bleibt damit in der für die spätere Verwendung der Bremsscheibe zulässigen Grössenordnung.

Durch den Wegfall des sonst erst später durch mechanische Bearbeitung abgetragenen Materialanteiles haben die erfindungsgemässen Bremsscheiben ein geringes Rohgewicht. Erhebliche Materialmängel und damit Herstellungkosten können eingespart werden, was von besonderem Vorteil ist, da es sich bei der Bremsscheibe um ein Massenprodukt handelt. Die Befestigungsöffnungen im Befestigungsteil können schliesslich nicht nur den jeweiligen funktionellen und konstruktiven Besonderheiten angepasst werden, sondern – falls gewünscht – auch in beliebig gewählter Form, z.B. in besonderer Weise kennzeichnend gestaltet werden. Da auch die Gusshaut nicht durch nachträgliche Bearbeitung zerstört wird, wird die nach dem Giessen vorhandene Festigkeit nicht beeinträchtigt.

Weitere Vorteile der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:

Fig. 1 einen Teil einer erfindungsgemässen, belüfteten Bremsscheibe in Draufsicht,

Fig. 2 die Bremsscheibe nach Fig. 1 im Axialschnitt,

Fig. 3 die Bremsscheibe nach Fig. 1 mit einem zu ihrer Herstellung verwendeten erfindungsgemässen Formkern in Ansicht gemäss Pfeil II in Fig. 4,

Fig. 4 die Bremsscheibe mit dem Formkern nach Fig. 3 im Axialschnitt.

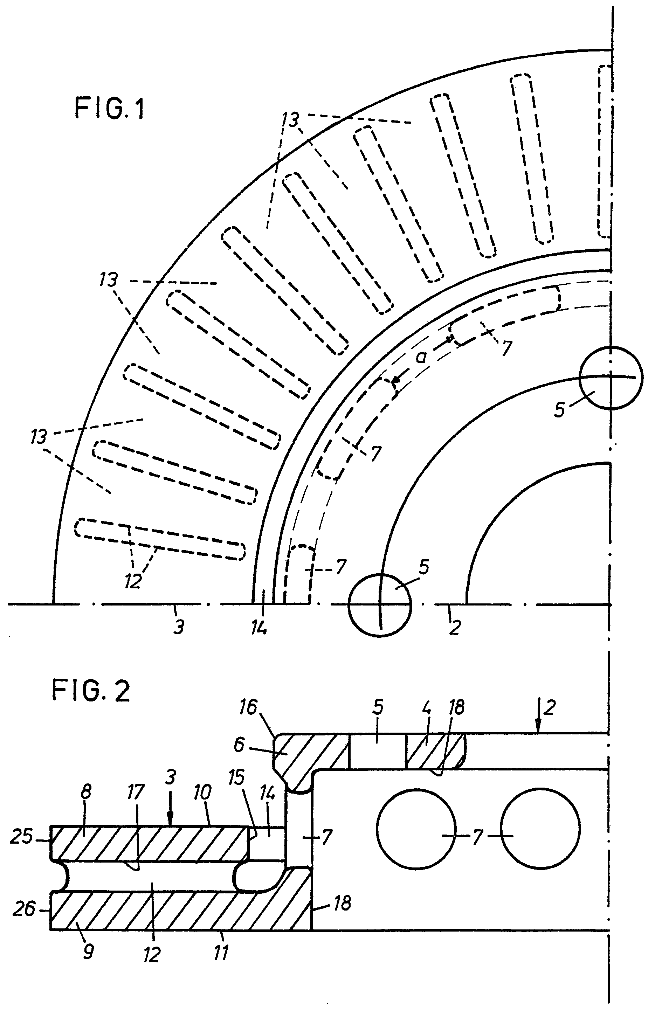

Die Bremsscheibe 1 nach den Fig. 1 bis 4 ist eine belüftete Axialscheibenbremse für ein Kraftfahrzeug. Sie besteht vorzugsweise aus Gusseisen und weist zur Befestigung an einem Fahrzeugrad einen zentralen Nabenteil 2 und einen mit dieser verbundenen, radial verlaufenden Scheibenkranz 3 auf. Der Nabenteil 2 hat einen radial verlaufenden Befestigungsabschnitt 4 mit etwa in halber Breite und in Umfangsrichtung mit gleichem Abstand angeordneten Befestigungsöffnungen 5 für (nicht dargestellte) Schrauben, mit denen die Befestigungsnabe am Fahrzeugrad befestigt werden kann. Der Befestigungsabschnitt 4 geht in einen axial verlaufenden zylindrischen Übergangsabschnitt 6 über, der ebenfalls etwa in halber Höhe und in Umfangsrichtung mit gleichem Abstand hintereinander liegende Luftdurchtrittsöffnungen 7 aufweist. Der Scheibenkranz 3 besteht aus zwei zueinander parallelen Reibringen 8 und 9 deren voneinander abgewandte Anlageflächen 10 und 11 als Bremsflächen dienen. Gegen diese Bremsflächen werden beim Bremsvorgang zwei (nicht dargestellte) Bremsbacken hydraulisch angedrückt. Die Bremsbacken sind an einem Bremssattel befestigt, der drehfest angeordnet ist und die Umfangsfläche der Bremsscheibe U-förmig umgreift.

Der eine Reibring 9 ist mit dem Nabenteil 2 verbunden und einstückig mit dem Übergangsabschnitt 6 ausgebildet. Der andere Bremsring 8 ist mit dem Bremsring 9 durch radial verlaufende Kühlkanalwände 12 verbunden. Zwischen den Kühlkanalwänden 12 sind mehrere in Umfangsrichtung mit gleichem Abstand voneinander liegende und im Querschnitt etwa rechteckige Kühlkanäle 13 vorgesehen. Diese erstrecken sich im wesentlichen über die ganze radiale Breite des Scheibenkranzes 3 und münden in einen Ringspalt 14 zwischen der radial inneren Stirnfläche 15 des Reibringes 8 und der benachbarten Mantelfläche 16 des Übergangsabschnittes 6 der Befestigungsnabe 2. Die Kühlkanäle 13 stehen mit den Luftdurchtrittsöffnungen 7 über den Ringspalt 14 in Verbindung.

Die Luftdurchtrittsöffnungen 7 haben jeweils gleiche Abmessungen; vorzugsweise haben sie kreisrunden Querschnitt, der so gross ist, dass sich die Öffnungen über etwa die Breite zweier Kühlkanäle 13 erstrecken. Der kleinste Abstand a einander benachbarter Luftdurchtrittsöffnungen 7 ist geringfügig kleiner als ihr Durchmesser. Wie insbesondere Fig. 2 zeigt, erstrecken sich die Luftdurchtrittsöffnungen 7 nach unten bis über die Innenfläche 17 des Reibringes 8. Dadurch wird eine strömungs- und festigkeitsmässig sowie hinsichtlich der thermischen Belastung des Nabenteiles 2 günstige Anordnung erreicht, die zugleich eine hohe Turbulenzwirkung und damit eine besonders wirksame Kühlung der radialen Kühlkanäle 13 sicherstellt. Vor allem hat die Anordnung der Luftdurchtrittsöffnungen aber den Vorteil, dass sie auch eine Kühlung der Innenseite 18 des Nabenteiles 2 gewährleisten, so dass die dort auftretende hohe Bremswärme unmittelbar und in kürzester Zeit abgeführt werden kann, wodurch verhindert wird, dass diese Bremswärme auf die Radlager übergeht und diese beschädigen kann.

Sowohl die Kühlkanäle 13 als auch die Befestigungsöffnungen 5 und die Luftdurchtrittsöffnungen 7 werden gleich beim Giessen der Bremsscheibe erzeugt, indem der zugehörige Formkern 19 mit entsprechenden Rippen 20, Verbindungsstegen 21 und zapfenartigen Ansätzen 22 ausgebildet ist.

Der Formkern 19 wird in einem Croning-Verfahren bzw. einem Maskenverfahren aus Quarzsand hergestellt, der mit Harz umgeben ist. Dieser wird bei etwa 200° mit Pressluft in einen die Negativform des Formkernes aufweisenden (nicht dargestellten) Kernkasten eingeblasen. Dabei härtet der Quarzsand zu einem stabilen Sandkern aus. Dieser weist zum Herstellen der oben beschriebenen Bremsscheibe eine der Anzahl der Kühlkanäle 13 entsprechende Zahl von radial verlaufenden Längsrippen 20 auf, die in Umfangsrichtung des Formkernes 19 gleichmässig verteilt angeordnet sind. Diese Längsrippen 20 erstrecken sich zwischen einem radial äusseren Ringteil 23 und einem radial inneren Ringteil 24. Der äussere Ringteil 23 hat etwa doppelte radiale Dicke im Vergleich zum inneren Ringteil 24 und ragt in axialer Richtung des Formkernes 19 zur Bildung der radial äusseren Stirnflächen 25 und 26 der Bremsringe 8 und 9 über die Längsrippen 20. Dagegen hat der innere Ringteil 24 etwa L-förmigen Querschnitt (Fig. 2). Die Rippen 20 die etwa gleiche Breite wie der kurze Schenkel 27 des inneren Ringteiles 24 haben, gehen einstückig in diesen über. Der lange Schenkel 28 des inneren Ringteiles 24 ist dicker als der kurze Schenkel 27 und erstreckt sich axial bis über den äusseren Ringteil 23, vorzugsweise um etwa die halbe axiale Höhe dieses Ringteiles. Der längere Schenkel 28 des inneren Ringteiles 24 ist über die im Querschnitt etwa kreisrunden, radial verlaufenden Verbindungsstege 21 mit einem Kernstück 29 des Formkernes 19 verbunden, das mit seiner radial äusseren Mantelfläche 30 und seiner Stirnseite 31 die axial und radial verlaufende Innenseite 18 des Nabenteiles 2 der Bremsscheibe 1 bildet. Die Verbindungsstege 21, die die Luftdurchtrittsöffnungen 7 der Bremsscheibe 1 bilden, sind in entsprechender Zahl und in Umfangsrichtung des Formkernes 19 gleichmässig verteilt angeordnet. Sie haben nur geringe radiale Erstreckung, die der Wanddikke des zylindrischen Übergangsabschnittes 6 des Nabenteiles 2 entspricht. Schliesslich sind am Kernstück 29, und zwar auf deren radial verlaufender und vom kurzen Schenkel 27 des inneren Ringteiles 24 abgewandter Stirnseite 31, die Ansätze 22 zur Bildung der Befestigungsöffnungen 5 vorgesehen. Diese Ansätze 22 sind kegelstumpfförmig ausgebildet und mit gleichem Abstand voneinander in Umfangsrichtung angeordnet. Vorzugsweise sind über den Umfang verteilt vier Befestigungsöffnungen vorgesehen.

Bei den mit dem Formkern 19 hergestellten Bremsscheiben werden somit die Befestigungsöffnungen und die Luftdurchtrittsöffnungen gleichzeitig beim Giessen der Bremsscheibe hergestellt, so dass der Formkern zur Bildung dieser Öffnungen nicht nachträglich bearbeitet werden muss. Durch eine solche Nachbearbeitung, beispielsweise durch Ausbohren der Öffnungen, würde die Gusshaut im Bereich der Bearbeitungsstellen zerstört und damit die Korrosionsgefahr der Bremsscheibe wesentlich erhöht und auch ihre Festigkeit erheblich beeinträchtigt werden. Da aber die beim Giessen entstehende glatte Gusshaut im Bereich der Luftdurchtrittsöffnungen 7 und der Befestigungsöffnungen 5 sowie der Kühlluftkanäle 13 bei der Bremsscheibe gemäss den Fig. 1 und 2 vollständig erhalten bleibt, treten keine Kerbspannungen, Risse oder andere festigkeitsmindernde Störungen auf, die bei einer mechanischen Bearbeitung der Bremsscheibe nicht zu verhindern wären. Da die Luftdurchtrittsöffnungen 7 und Befestigungsöffnungen 5 auch gleichzeitig beim Giessen der Bremsscheibe hergestellt werden, hat die mit dem beschriebenen Formkern 19 hergestellte Bremsscheibe ein geringes Rohgewicht, das zu einer erheblichen Materialieneinsparung führt. Dies ist von grosser wirtschaftlicher Bedeutung, da die Bremsscheiben Massenprodukte sind.

Da die Innenkontur und Aussenkontur der mit den Formkern 19 gebildeten Bremsscheiben durch jeweils einen einzigen Formkern gebildet ist, können die Luftdurchtrittsöffnungen 7 beliebig angeordnet und damit an die funktionellen und konstruktiven Bedingungen der jeweils herzustellenden Bremsscheibe angepasst werden. Ausserdem hat die Bremsscheibe im Bereich des zylindrischen Übergangsabschnittes 6 eine gleichmässige Wandstärke, so dass weitere Nacharbeiten, die ebenfalls zu einer Beschädigung der Gusshaut führen können, nicht erforderlich sind. Schliesslich ist auch die Ausgangsunwucht im Bereich der Befestigungsnabe durch den einteiligen Formkern 19 äusserst gering. Da sämtliche Nacharbeiten durch die Verwendung des einteiligen Formkernes 19 entfallen, kann die mit diesem Formkern gebildeten Bremsscheibe mit äusserst geringem Arbeits- und Zeitaufwand und damit besonders kostengünstig hergestellt werden.

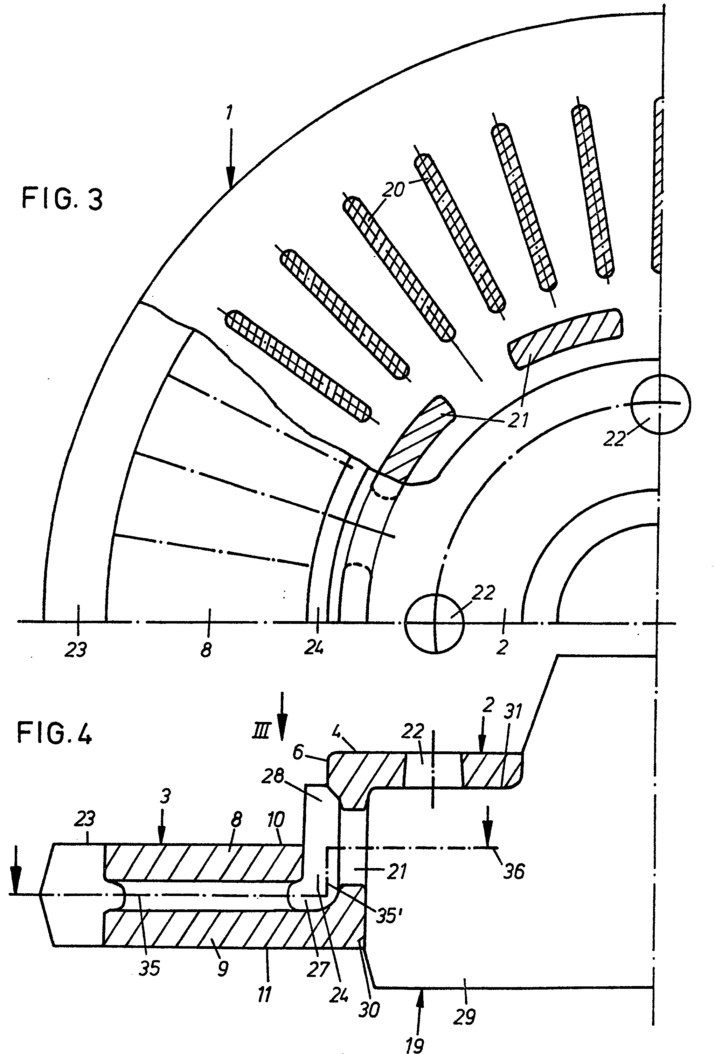

Infolge der beschriebenen Formkernausbildung ist zur Herstellung des Formkernes nur eine zweigeteilte Form notwendig, mit der im Wege des Blasspritzens oder Formgiessens der einteilige Formkern in einem Arbeitsgang hergestellt werden kann. Die Trennflächen des Formkernes verlaufen, wie in Fig. 4 mit strichpunktierten Linien dargestellt, in einer zum radial äusseren Ringteil 23 und zu den Längsrippen 20 symmetrischen Radialebene 35, die dann im Bereich des radial inneren Ringteiles 24 in eine mit der Mantelfläche 16 des Übergangsabschnittes 6 der Bremsscheibe 1 etwa in einer gemeinsamen Ebene liegende Trennebene 35' übergeht. An die Trennebene 35' schliesst eine weitere Radialebene 36 an, an der die beiden Formteile einander berühren. Diese Radialebene 36 liegt etwa in einer Ebene mit der Anlagefläche 10 des Reibringes 8.

**Patentansprüche**

1. Gegossene Bremsscheibe mit einem Nabenteil (2), der mit einem ringförmigen Abschnitt (6) an einen Scheibenkranz (3) anschliesst, der zwei als Anlageflächen (10, 11) für Bremsbacken dienende planparallele Stirnflächen hat, die an Reibringen (8, 9) vorgesehen sind, von denen der zweite Reibring (9) mit dem ringförmigen Abschnitt (6) verbunden ist, während der erste Reibring (8) mit dem zweiten Reibring (9) über Wände (12) von radial verlaufenden Kühlkanälen (13) des Scheibenkranzes (3) verbunden ist, wobei der ringförmige Abschnitt (6) sich über die ganze Höhe des Scheibenkranzes (3) erstreckt, zwischen der einen geringeren Abstand vom Befestigungsabschnitt (4) aufweisenden Anlagefläche (10) und dem ringförmigen Abschnitt (6) ein Ringspalt (14) vorgesehen ist und der Nabenteil (2) in einem etwa radial verlaufenden Befestigungsabschnitt (4) Befestigungsöffnungen (5) für Halteteile aufweist, dadurch gekennzeichnet, dass der ringförmige Abschnitt (6) zylindrisch ausgebildet ist und mehrere in Umfangsrichtung mit Abstand hintereinander liegende Luftdurchtrittsöffnungen (7) aufweist, die mit dem Ringspalt (14) in Verbindung stehen, so dass die Luftdurchtrittsöffnungen (7) über den Ringspalt (14) mit den Kühlkanälen (13) strömungsverbunden sind, derart, dass die Luftdurchtrittsöffnungen (7), in radialer Richtung der Bremsscheibe gesehen, die Kühlkanäle (13) teilweise übergreifen.

2. Formkern zur Herstellung einer gegossenen Bremsscheibe nach Anspruch 1, mit einem zentralen Kernstück und einem äusseren Ringteil, dadurch gekennzeichnet, dass das Kernstück (29) und der Ringteil (23, 24) einteilig ausgebildet sind, und dass zwischen dem Ringteil und dem Kernstück mindestens ein etwa radial verlaufender Verbindungssteg (21) zur Bildung der Luftdurchtrittsöffnungen (7) sowie zapfenartige Ansätze (22) zur Bildung der Befestigungsöffnungen (5) am Befestigungsabschnitt (4) vorgesehen sind.

3. Formkern nach Anspruch 2, dadurch gekennzeichnet, dass mehrere in Umfangsrichtung des Formkerns (19) mit gleichem Abstand hintereinander angeordnete Verbindungsstege (21) vorgesehen sind.

4. Formkern nach Anspruch 3, dadurch gekennzeichnet, dass die Verbindungsstege (21) im wesentlichen kreisrunden Querschnitt haben.

5. Formkern nach einem der Ansprüche 2 bis 4, dadurch gekennzeichnet, dass sich die Verbindungsstege (21) in Umfangsrichtung des Formkernes (19) über etwa drei in Umfangsrichtung mit gleichem Abstand hintereinander liegende, radial verlaufende, zur Bildung der Kühlkanäle (13) vorgesehene Rippen (20) erstrecken.

6. Formkern nach Anspruch 5, dadurch gekennzeichnet, dass die zapfenartigen Ansätze (22) kegelstumpfförmig nach aussen verjüngt ausgebildet sind.

7. Verfahren zur Herstellung einer Bremsscheibe nach Anspruch 1, bei dem der Scheibenkranz und der Nabenteil unter Verwendung eines Formkerns nach den Ansprüchen 2 bis 6 gegossen werden, dadurch gekennzeichnet, dass die Befestigungsöffnungen (5) und die Luftdurchtrittsöffnungen (7) gleichzeitig beim Giessen der Bremsscheibe gebildet werden.

**Claims**

1. Cast brake disc with a hub section (2) in contact with a circular section (6) on a disc rim (3) which has two plane parallel surfaces which serve as the contact surfaces (10, 11) for brake pads and which are provided on friction rings (8, 9) of which the second ring (9) is connected with the circular section (6) whilst the first ring (8) is connected to the second ring (9) through walls (14) of radial cooling ducts (13) in the disc rim (3), whereby the circular section (6) extends over the full height of the disc rim (3), a circular space (14) is provided between the contact surface (10) at a lower distance from the fixing section (4) and the circular section (6) and the hub section (2) possesses fixing holes (5) in an approximately radial fixing section (4), characterized by the fact that the circular section (6) is cylindrical in design and possesses several ventilations holes (7) at intervals apart in the circumference direction which are connected to the circular space (14) and therefore to the cooling ducts (13), so that the ventilation holes (7) protrude over part of the cooling ducts (13) when viewed in the radial direction of the brake disc.

2. Mould core for the manufacture of a cast brake disc according to Claim 1, with a central core and an outer ring section, characterized by the fact that the core (29) and the ring section (23, 24) are of one piece design and that between the ring section and the core there is at least one approximately radial connection stem (21) to form the ventilation holes (7) as well as lug-shaped shoulders (22) for forming the fixing openings (5) on the fixing section (4).

3. Mould core according to Claim 2, characterized by the fact that several equally spaced connection stems (21) are provided in the circumference direction of the mould core (19).

4. Mould core according to Claim 3, characterized by the fact that the connection stems (21) are generally of circular cross-section.

5. Mould core according to one of Claims 2 to 4, characterized by the fact that the connection stems (21) extend in the circumference direction of the mould core (19) over approx. three equally spaced radial ribs (20) in the circumference direction for forming the cooling ducts (13).

6. Mould core according to Claim 5, characterized by the fact that the lug-shaped shoulders (22) slope conically outwards.

7. Process for the manufacture of a brake disc according to Claim 1 in which the disc rim and the hub section are cast by using a mould core according to Claims 2 to 6, characterized by the fact that the fixing holes (5) and the ventilation openings (7) are formed when casting the brake disc.

**Revendications**

1. Disque de frein coulé comportant une partie formant moyeu (2) qui est reliée au moyen d'une portion annulaire (6) à une couronne de disque (3), laquelle présente deux faces frontales planes et parallèles qui, servant de surfaces d'appui (10, 11) pour des mâchoires de frein, sont prévues sur des bagues de frottement (8, 9) dont la seconde bague de frottement (9) est reliée à la portion annulaire (6), alors que la première bague de frottement (8) est reliée à la seconde bague de frottement (9) par l'intermédiaire de parois (12) de canaux de refroidissement (13) de la couronne de disque (3) qui s'étendent radialement, de telle manière que la portion annulaire (6) s'étend sur toute la hauteur de la couronne de disque (3), une fente annulaire (14) étant prévue entre la surface d'appui (10) la moins éloignée de la portion de fixation (4) et la portion annulaire (6) et la partie formant moyeu (2) présentant, dans une portion de fixation (4) s'étendant sensiblement radialement, des ouvertures de fixation (5) pour des organes de retenue, caractérisé en ce que la portion annulaire (6) est réalisée sous une forme cylindrique et présente plusieurs orifices de passage d'air (7) disposés à certains intervalles les uns à la suite des autres dans la direction périphérique et qui sont en communication avec la fente annulaire (14) de sorte que les orifices de passage d'air (7) communiquent du point de vue de l'écoulement par l'intermédiaire de la fente annulaire (14) avec les canaux de refroidissement (13), de telle manière que les orifices de passage d'air (7), observés dans la direction radiale du disque de frein, s'étendent partiellement sur les canaux de refroidissement (13).

2. Noyau de moule pour la fabrication d'un disque de frein coulé selon la revendication 1, comprenant une partie centrale et une partie annulaire extérieure, caractérisé en ce que la partie centrale (29) et la partie annulaire (23, 24) sont réalisées en une seule pièce et en ce qu'il est prévu entre la partie annulaire et la partie centrale au moins une entretoise (21) s'étendant à peu près radialement pour former les orifices de passage d'air (7) ainsi que des saillies (22) en forme de tenons pour former les ouvertures de fixation (5) dans la portion de fixation (4).

3. Noyau de moule selon la revendication 2, caractérisé en ce qu'il est prévu plusieurs entretoises (21) disposées à des intervalles réguliers les unes à la suite des autres dans la direction périphérique du noyau de moule (19).

4. Noyau de moule selon la revendication 3, caractérisé en ce que les entretoises (21) présentent une section sensiblement circulaire.

5. Noyau de moule selon l'une quelconque des revendications 2 à 4, caractérisé en ce que les entretoises (21) s'étendent dans la direction périphérique du noyau de moule (19) sur environ trois nervures radiales (20) qui, s'étendant rédialement et disposées à des intervalles réguliers les unes à la suite des autres dans la direction périphérique, sont prévues pour former les canaux de refroidissement (13).

6. Noyau de moule selon la revendication 5, caractérisé en ce que les saillies (22) en forme de tenons sont réalisées de façon à se rétrécir tronconiquement vers l'extérieur.

7. Procédé pour la fabrication d'un disque de frein selon la revendication 1, dans lequel la couronne du disque et la partie formant moyeu sont obtenues par coulée en utilisant un noyau de moule selon les revendications 2 à 6, caractérisé en ce que les ouvertures de fixation (5) et les orifices de passage d'air (7) sont formés au moment même de la coulée du disque de frein.

## FIG.1

## FIG. 2

0 143 264

FIG. 3

FIG. 4